# NEUE EUROPÄISCHE PATENTSCHRIFT

(11) **EP 0 799 436 B2**
(45) Veröffentlichungstag und Bekanntmachung des Hinweises auf die Entscheidung über den Einspruch: **11.09.2002**
(45) Hinweis auf die Patenterteilung: 13.01.1999
(21) Anmeldenummer: 96930144.9
(22) Anmeldetag: 31.08.1996
(51) Int. Cl.: G03B 15/10, G03B 21/28

(54) **VERWENDUNG EINES BILDPROJEKTORS ZUM DARSTELLEN SICH BEWEGENDER BILDER IM HINTERGRUND EINER BÜHNE**
USE OF AN IMAGE PROJECTOR FOR DISPLAYING MOVING IMAGES IN THE BACKGROUND OF A STAGE
UTILISATION D'UN PROJECTEUR D'IMAGES POUR PROJECTION D'IMAGES MOBILES A L'ARRIERE-PLAN D'UNE SCENE

(30) Priorität: 20.09.1995 DE 29515073 U
(43) Veröffentlichungstag der Anmeldung: 08.10.1997
(73) Patentinhaber: Maass, Uwe, 50996 Köln (DE)
(72) Erfinder: Maass, Uwe, 50996 Köln (DE)
(74) Vertreter: Lenzing, Andreas, Dr.
(86) Internationale Anmeldenummer: EP9603832
(87) Internationale Veröffentlichungsnummer: WO97011405

(56) Entgegenhaltungen:
- DE-A- 4 445 302
- DE-A1- 3 808 406
- DE-U1- 9 001 172
- FR-A- 2 714 741
- GB-A- 2 039 680
- US-A- 1 053 887
- US-A- 1 358 110
- US-A- 2 198 815
- Römpps Chemie-Lexikon, 1987 Römpps Chemie-Lexikon, 1987
- Römpss Chemie-Lexikon, 1987 (DE A 4445301) Römpss Chemie-Lexikon, 1987 (DE A 4445301)
- FOIL Mirror-A shatterproof idea, Price List FOIL Mirror-A shatterproof idea, Price List der Fa. alluvial leichtspiegel gmbh der Fa. alluvial leichtspiegel gmbh
- Prospekt Holosion der Fa. Cinetics Prospekt Holosion der Fa. Cinetics Performance W. Lettner GmbH Performance W. Lettner GmbH

## Beschreibung

Die Erfindung betrifft die Verwendung eines Bildprojektors, einer reflektierenden Fläche und einer glatten transparenten und teilreflektierenden Folie zum Darstellen sich bewegender Bilder im Hintergrund einer Bühne oder dergleichen unter Verwendung eines Bildprojektors.

Diavorträge sind bekannt, und dieses Wort ist ein feststehender Ausdruck. Bei einem Diavortrag projiziert der Vortragende feststehende Bilder auf eine Leinwand. Er selbst steht außerhalb des Lichtkegels zwischen Projektor und Leinwand und kommentiert die Bilder. Statt des Diaprojektors kann der Vortragende auch einen Filmapparat benutzen. Dann erscheinen bewegliche Bilder auf der Leinwand, und der Vortragende kommentiert diese. In beiden Fällen steht der Vortragende außerhalb des Lichtkegels. Er erscheint nicht auf dem oder in dem Bild selbst. Falls er in den Lichtkegel hineintreten würde, würde er einen Teil des Lichtstrahls abdecken. Statt des Bildes würde dann der Schatten des Vortragenden auf der Leinwand erscheinen. Falls der Vortragende seine Zuschauer auf eine bestimmte Stelle im Bild hinweisen will, verwendet er hierzu einen Zeigeslock oder eine Lampe mit einem scharf gebündelten Lichtstrahl.

Die obige Art des Vortrages reicht lür Bild- und Filmvorträge von Foto- und Filmamateuren aus. Auch Reisende, die einem großen Zuschauerkreis Filme oder Dias von ihren Reisen zeigen, können diese Vortragsart ohne Schaden verwenden. Die Zuschauer interessieren sich nur für den Film oder die Dias und die Worte des Vortragenden. Der Art des Vortrages und dem technischen Beiwerk messen sie nur eine geringe Bedeutung zu.

Die Lage ist anders, wenn die Zuschauer kein besonderes Interesse an den zu zeigenden Gegenständen haben und ein Interesse erst noch geweckt werden muß. Die Lage ist auch dann anders, wenn sich der Filmvortrag aus übergeordneten Gründen auf einem hohen technischen Niveau abspielen soll. Die Lage ist auch dann anders, wenn der Filmvortrag aufgelockert und mit sogenannten Schaueffekten verbunden werden soll.

Als Geistertrick wird in der Literatur (zum Beispiel Bühnentechnische Rundschau, BTR 3/1990, Seiten 24. 25) eine Theatervorführung beschrieben, bei der eine Glasscheibe im vorderen Bereich der Bühne schräg aufgestellt ist. Unter dieser Glasscheibe und in einem abgesenkten Teil der Bühne befindet sich ein Schauspieler. Dieser ist mit weiten weißen Gewändern behängt und stellt den Geist dar. Er wird von einem ebenfalls unter der Bühne befindlichen Scheinwerfer angestrahlt. Das Bild dieses den Geist darstellenden Schauspielers wird auf die Glasscheibe projiziert und erscheint den Zuschauern hinter der Glasscheibe als virtuelles Bild. Bei dieser Theaterdarstellung befindet sich ein zweiter Schauspieler auf der Bühne Er stellt einen den Geist bezwingenden Zauberer oder Helden dar.

Bekannt ist eine Vorrichtung zum Darstellen sich bewegender Bilder im Hintergrund einer Bühne (FR-A-2 714 741) mit mindestens einem Bildprojektor, der ein Bild oder einen Film auf einen vor der Bühne angeordneten sogenannten ebenen horizontalen Bildschirm wirft, mit mindestens einer über dem Bildschirm um 45° geneigten sogenannten optischen Fläche, die einerseits wie ein Spiegel und andererseits wie eine vollständig transparente Scheibe wirkt, und mit mehreren Lichtquollen. die die auf der Bühne befindlichen Gegenstände beleuchten. Bei dieser bekannten Vorrichtung ist der Bildprojektor unmittelbar über der sogenannten optischen Fläche bzw. dem sogenannten Bildschirm angeordnet.

Die DE-A-3808406 zeigt eine Vorrichtung zur Erzeugung von durch Spiegelung entstehenden luftbildern. Bei dieser Vorrichtung wird eine im 45°-Winkel angeordnete teilreflektierende Scheibe zur Erzeugung der Luftbilder verwendet.

Bei Bild- und Filmvorträgen, sei es bei Verkaufs- und Werbeveranstaltungen, in Museen, in Schulen usw., ist es erwünscht, sie locker zu gestalten und dabei dem Vortragenden die Möglichkeit zu geben, selbst in das Bild hineinzutreten, ohne dadurch die Wiedergabe des Bildes auf einer Leinwand oder allgemein auf einer Fläche zu stören. Der Erfindung liegt die Aufgabe zugrunde, eine solche lockere Gestaltung von Film- und Bildvorträgen und ähnlichem zu ermöglichen, bei dem der Vortragende oder die Vortragenden selbst in das Bild hineintreten können. Damit kann die Aufmerksamkeit der Zuschauer erregt und/oder verstärkt werden. Weiter läßt sich das Bild oder lassen sich einzelne Bildelemente besser erläutern.

Die Lösung für diese Aufgabe ergibt sich durch die Verwendung eines Bildprojektors in Verbindung mit den Merkmalen des Anspruchs 1.

Die Erfindung macht von dem physikalischen Prinzip Gebrauch, das jeder Autofahrer an der Windschutzscheibe seines Fahrzeuges erlebt. Ein auf der Ablage vor der Windschutzscheibe liegender Gegenstand spiegelt sich in dieser so, daß er dem Autofahrer - in Fahrtrichtung gesehen - vor der Windschutzscheibe zu liegen scheint. Bei der erfindungsgemäßen Anordnung wird der darzustellende Gegenstand vom Bildprojektor auf die reflektierende Fläche geworfen, die der Ablage entspricht, und er spiegelt sich dann in der transparenten glatten Folie derart, daß er dem Zuschauer auf dem Hintergrund der Bühne erscheint. Die über der gesamten Breite der Bühne verlaufende und an deren Boden und Decke gehaltene Folie wirkt wie die Windschutzscheibe in einem Kraftfahrzeug. Ein sich an irgendeiner Stelle des Zuschauerraumes befindender Zuschauer glaubt, jeden von der reflektierenden Fläche auf die Folie reflektierten Gegenstand hinter dieser zu sehen. Der Vortragende steht auf der Bühne außerhalb des Lichtkegels des Bildprojektors. Vom Zuschauerraum aus gesehen, steht er hinter der reflektierenden Fläche. Das heißt, daß weder sein Bild auf dem Hintergrund abgebildet wird noch er die Bilddarstellung auf diesem stört. Er kann die Zuschauer ohne Zuhilfenahme eines Zeigestockes oder einer Lampe auf bestimmte Einzelheiten der Bilddarstellung hinweisen. Ebenso kann er sich mit den Bildern bewegen und deren Wiedergabe durch seine Körpersprache interpretieren.

Zweckmäßig verläuft die Folie unter einem Winkel von etwa 45° zum Boden der Bühne. Bei dem Bildprojektor kann es sich um eine Bildschirmröhre mit sehr hoher Auflösung handeln. Diese kann von einem Rechner gesteuert werden. Damit läßt sich das Bild auch elektronisch beeinflussen. Zweckmäßig wird ein rechnergesteuerter intelligenter Lichtverstärker (auch als ILA, intelligent light amplifier, bekannt) als Bildprojektor verwendet. Dieser ist horizontal ausgerichtet und strahlt in Richtung des Zuschauerraumes. Damit liegt seine längste Erstreckung in der Horizontalen, und er läßt sich einfach vor den Zuschauern verbergen. Damit das von ihm abgestrahlte Licht die reflektierende Fläche erreicht, ist in einer weiteren Ausgestaltung vorgesehen, daß ein Spiegel vor dem Bildprojektor oder rechnergesteuerten Lichtverstärker angeordnet und dieser auf den Spiegel gerichtet ist und der Spiegel das von dem Lichtverstärker abgestrahlte Licht empfängt, auf die reflektierende Fläche ausgerichtet ist und das Licht auf diese projiziert.

Der Zuschauer soll nach Möglichkeit nicht merken, wie das Bild im Hintergrund der Bühne entsteht. Daher werden der Bildprojektor oder der Lichtverstärker und der Spiegel zweckmäßig durch eine über die gesamte Breite der Bühne verlaufende Leiste oder einen Vorhang nach vorne abgedeckt. Die Folie selbst steht unter einer sehr hohen Zugspannung von bis zu 8 t. Damit wird sie glatt gespannt, und das Bild wird nicht verzerrt. Die Folie ist vorzugsweise ohne jegliche Einschlüsse. Weiter soll sie auf ihrer Vorder- und Rückseite sehr glatt sein. Weiter soll sie sehr dünn sein. Schließlich soll die Folie 30 bis 50 %, vorzugsweise 30 %, des auf sie auftreffenden Lichtes reflektieren. Eine solche Folie eignet sich besonders gut für die erfindungsgemäßen Zwecke. Das Fehlen von Einschlüssen und ihre glatte Vorderund Rückseite führen zu sehr geringen und nicht merkbaren Verzerrungen. Dem gleichen Zweck dient, daß die Folie sehr dünn ist. Spiegelungen oder Reflexionen an ihrer Vorder- und Rückseite fallen damit zusammen. Die für die erfindungsgemäßen Zwecke verwendete Folie wird im allgemeinen in Dia- oder Kleinbildfilme weiterverarbeitet. Bei der Verwendung als Diafilm wird sie in das Format der Dia- oder Kleinbildfilme aufgeschnitten. Bei ihrer Anwendung für die Erfindung weist die Folie eine Fläche von mindestens 3 m mal 4 m auf.

In einer zweckmäßigen Ausführungsform ist die Folie auf ein Aufwickelrohr aufgewickelt. Mit diesem wird sie an der Decke der Bühne aufgehängt. Zweckmäßig wird sie zusammen mit dem Bildprojektor oder dem intelligenten Lichtverstärker an der Decke befestigt. Das freie Ende der Folie läßt sich vom Aufwickelrohr abziehen und wird am Boden der Bühne festgespannt. Hierzu dient ein am Boden der Bühne angeordneter Bock.

Bei der reflektierenden Fläche kann es sich um eine auf den Boden der Bühne aufzulegende weißen Leinwand handeln. Bei der reflektierenden Fläche kann es sich aber auch um einen einfachen weißen Farbanstrich handeln. Da sich der Vortragende außerhalb, und zwar hinter ihm, bewegt, behält er seine reflektierenden Eigenschaften sehr lange bei.

Die Anordnung wird zweckmäßig bei einer Bühne mit heb- und senkbarem Boden verwendet. Die reflektierende Fläche, die Leinwand, der Farbanstrich oder dergleichen befindet sich auf diesem heb- und senkbaren Teil des Bodens. Bei einem Absenken des Bodens vergrößert sich der Abstand zwischen dem Bildprojektor und der reflektierenden Fläche. Damit verschiebt sich das im Hintergrund der Bühne erscheinende virtuelle Bild nach hinten.

Die Anordnung soll sich leicht von Ort zu Ort transportieren und an verschiedenen Orten aufstellen lassen. Hierzu sieht die Erfindung in einer zweckmäßigen Ausgestaltung vor, daß sämtliche Bauteile von einem Gitterrahmen umschlossen und an diesem befestigbar sind. Zweckmäßig weist der Gitterrahmen auf den beiden Seiten der Anordnung oder der Bühne aufstellbare Einheiten auf, die jeweils einen Untergurt, einen Obergurt, einen Vordergurt und einen Hintergurt aufweisen. Die auf den beiden Seiten der Anordnung oder der Bühne aufstellbaren Gitterrahmen-Einheiten lassen sich durch querverlaufende Streben miteinander verbinden.

Zweckmäßig ist das Aufwickelrohr über Bügel an den Obergurten befestigt, während der das freie Ende der Folie haltende Bockan den Untergurten befestigt ist.

Am Beispiel der in der Zeichnung gezeigten Ausführungsformen wird die Erfindung nun weiter beschrieben. In der Zeichnung ist:
- Fig. 1: eine vereinfachte schematische Seitenansicht der Anordnung,
- Fig. 2: eine ausführlichere schematische Seitenansicht der Anordnung mit gleichzeitiger Darstellung des Zuschauerraumes,
- Fig. 3: eine Seitenansicht der Bühne ähnlich der Darstellung in Fig. 2 mit abgesenktem Boden,
- Fig. 4: ein Blick auf Zuschauerraum und Bühne in Blickrichtung der Linie IV - IV in Fig. 2,
- Fig. 5: eine Seitenansicht der Anordnung bei Verwendung der sie umschließenden Gitterrahmen und
- Fig. 6: eine Aufsicht, gesehen in Blickrichtung der Linie VI - VI.

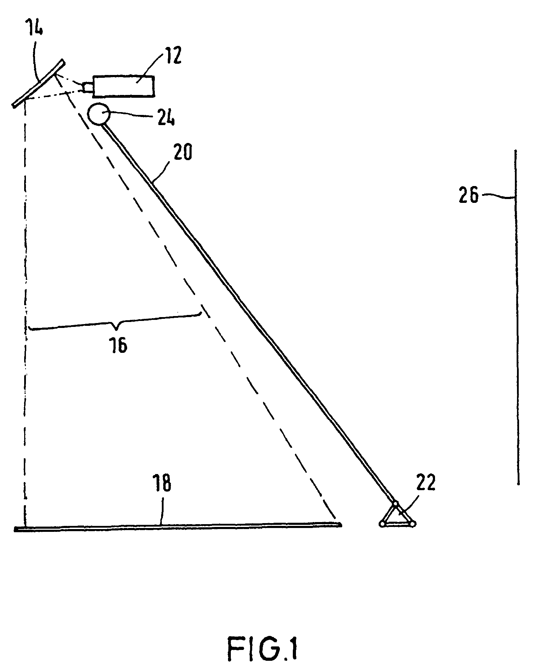

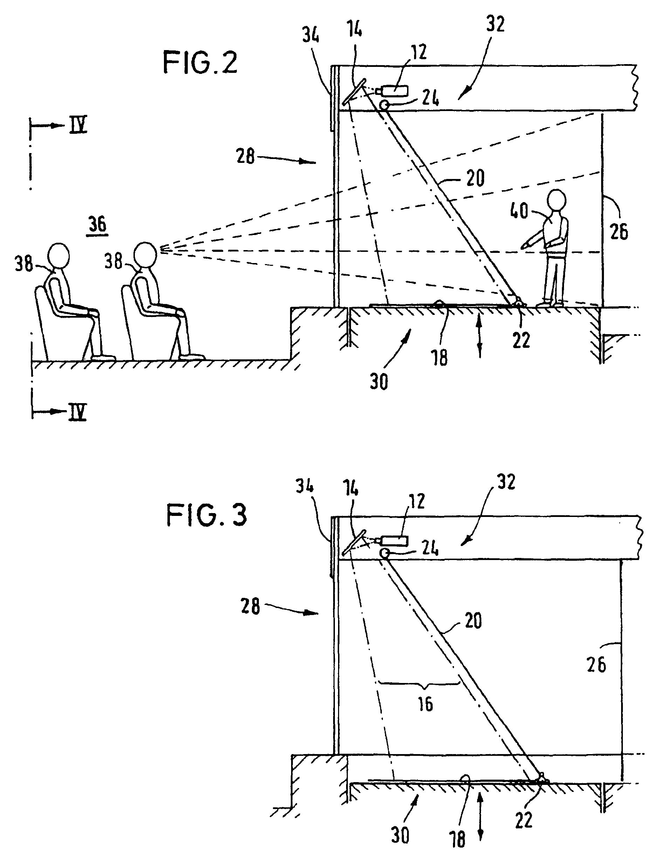

Fig. 1 zeigt das physikalische Prinzip der Anordnung mit dem als Bildprojektor 12 wirkenden rechnergesteuerten intelligenten Lichtverstärker mit dem bei Blick auf Fig. 1 links vor diesem angeordneten Spiegel 14, der das auf ihn gestrahlte Licht des Lichtverstärkers in Form eines durch zwei gestrichelte Linien angedeuteten Lichtkegels 16 auf die reflektierenden Fläche 18 projiziert, mit der Folie 20 mit ihrer unteren Halterung in Form eines Bockes 22 und ihrer oberen Halterung in Form eines Aufwickelrohres 24 und dem virtuellen Bild 26, das sich im Hintergrund der Bühne darstellt. Der rechnergesteuerte intelligente Lichtverstärker projiziert ein sich bewegendes Bild auf den Spiegel 14. Dieser wirft es auf die reflektierende Fläche 18, die es auf die Folie 20 wirft. Für sich links von Fig. 1 befindende Zuschauer - siehe Fig. 2 - erscheint ein sich bewegendes Bild im Hintergrund als virtuelles Bild 26.

Die Figuren 2 und 3 zeigen eine praktische Anwendung der Anordnung bei einer Vortragsveranstaltung. Im einzelnen zeigt Fig. 2 noch die Bühne 28, deren Boden 30 und deren Decke 32. Unter der Decke 32 der Bühne 28 verläuft über deren gesamter Breite eine Abdeckleiste 34 oder ein Vorhang. Dieser deckt den rechnergesteuerten intelligenten Lichtverstärker und den Spiegel 14 nach vorne ab. Im Zuschauerraum 36 sitzen die Zuschauer 38. Der Vorführer oder Vortragende 40 steht auf der Bühne 28 hinter der reflektierenden Fläche 18. Bei dieser handelt es sich zum Beispiel um eine Leinwand oder einen weißen Farbanstrich. Der unter dem Boden 30 eingezeichnete Doppelpfeil soll andeuten, daß sich dieser heben und senken läßt. Fig. 2 zeigt den Boden 30 auf seiner normalen Höhe. Das virtuelle Bild 26 erscheint im Hintergrund der Bühne 28 an einer bestimmten Stelle. Fig. 3 zeigt die gleiche Bühne 28 mit abgesenktem Boden 30. Bei abgesenktem Boden 30 wandert das virtuelle Bild 26 nach hinten, bei Blick auf die Figuren 2 und 3 nach rechts.

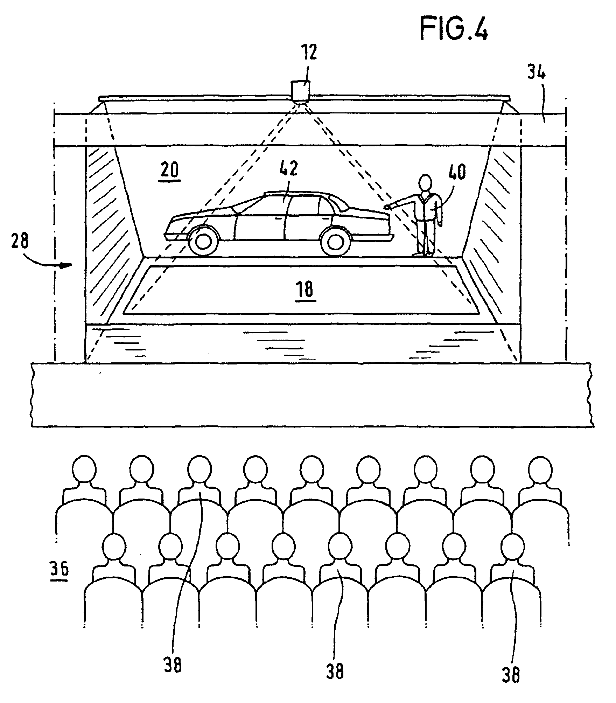

Fig. 4 zeigt eine praktische Anwendung der Anordnung bei einer Vortragsveranstaltung über Kraftfahrzeuge. Fig. 4 zeigt einen Vorführgegenstand 42, im Beispiel ein Kraftfahrzeug. Die Zuschauer 38 sehen es im Hintergrund als virtuelles Bild. Sie erkennen nicht, daß es sich um eine Reflexion an der reflektierenden Fläche 18 und der Folie 20 handelt. Sie sehen nur, wie sich der Vortragende 40 frei vor dem Kraftfahrzeug bewegt, mit seinen Armen und Händen auf das Kraftfahrzeug und Teile des Kraftfahrzeuges hinweist, Einzelheiten mit Worten erläutert und dabei die Wiedergabe des Kraftfahrzeugs im Hintergrund als virtuelles Bild 26 weder stört noch in irgendeiner Weise beeinflußt.

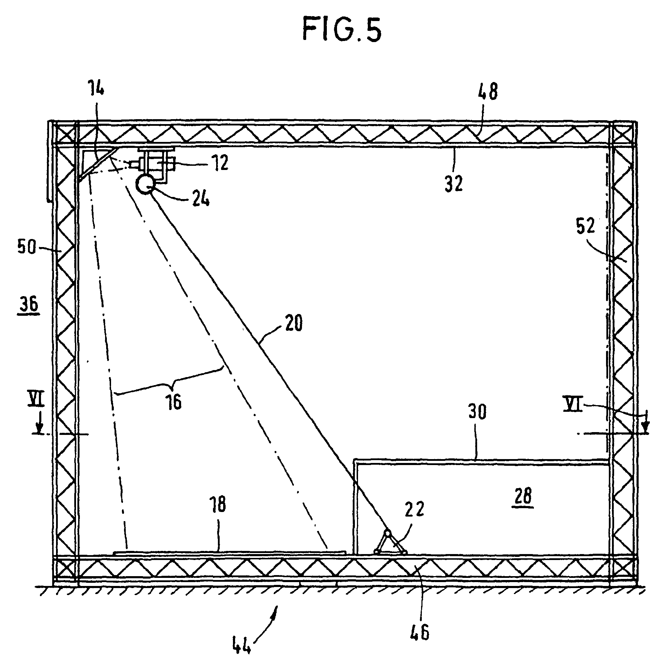

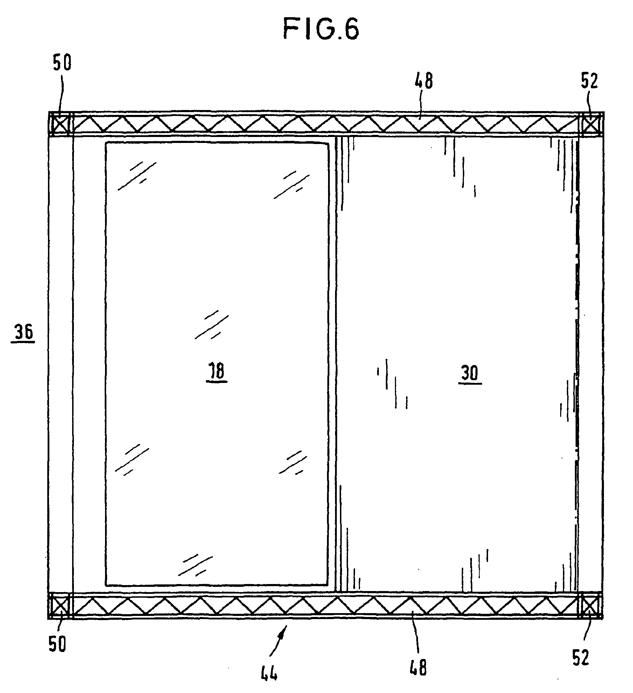

Die Figuren 5 und 6 zeigen die transportfähige und an jedem beliebigen Ort aufstellbare Ausführungsform der Anordnung. Hierzu dienen an deren beiden Seiten aufstellbare Gitterrahmen 44. Jeder Gitterrahmen besteht aus einem Untergurt 46, einem Obergurt 48, einem Vordergurt 50 und einem Hintergurt 52. Gitterrahmen dieser Art sind bekannt. Jeder Gurt besteht aus mehreren lösbar miteinander verbindbaren Teilen. Zum Aufstellen der Anordnung werden sie aneinandergesetzt und miteinander verbunden. Zum Transport werden sie auseinandergenommen und lassen sich als kleinere Einheiten auf einem Lastkraftwagen oder dergleichen transportieren. Gemäß der Darstellung in Fig. 5 sind der rechnergesteuerte intelligente Lichtverstärker und das Aufwickelrohr 24 an einem Bügel befestigt. Dieser ist seinerseits an einer die beiden Obergurte 48 verbindenden Querstrebe befestigt. Gleiches gilt für den Spiegel 14. Beim Aufbau der Anordnung wird die Folie 20 vom Aufwickelrohr 24 abgezogen, am Bock 22 befestigt und anschließend gespannt. Die reflektierende Fläche 18 wird in Form einer weiß überzogenen oder weiß angestrichenen Platte oder dergleichen oder in Form einer Leinwand auf den Boden aufgelegt. Die Bühne 28, auf der der Vorführer 40 bei einer Vorführung steht, setzt sich aus für sich allein bekannten Teilen zusammen und wird im hinteren Bereich der Anordnung aufgebaut.

## Patentansprüche

1. Verwendung eines Bildprojektors (12), einer reflektierenden Fläche (18) und einer glatten transparenten und teilreflektierenden Folie (20) zum Darstellen von Bildern im Hintergrund einer Bühne (28) oder dergleichen, wobei die reflektierende Fläche (18) auf dem Boden (30) der Bühne (28) in deren mittlerem Bereich angeordnet ist und die Folie (20) zwischen dem Boden (30) und der Decke (32) der Bühne (28) über deren gesamter Breite derart verläuft, daß ihr unteres Ende an einer Stelle zwischen der reflektierenden Fläche (18) und dem Hintergrund der Bühne (28) und ihr oberes Ende an der Decke (32) an einer weiter vorn liegenden Stelle gehalten ist, und der Bildprojektor (12) an der Decke (32) an einer weiter vorn liegenden Stelle gehalten ist, und der Bildprojektor (12) an der Decke (32) vor dem dort gehaltenen oberen Ende der Folie (20) angeordnet und auf die reflektierende Fläche (18) gerichtet ist, so daß das vom Bildprojektor (12) projizierte Licht zuerst von der reflektierenden Fläche (18) teilweise reflektiert wird, so daß aus dem reflektierten Licht ein virtuelles Bild (26) im Hintergrund der Bühne (28) entsteht, wobei die Folie (20) eine Fläche von mindestens 3 m mal 4 m aufweist und unter Zugspannung steht.

2. Verwendung eines Bildprojektors nach Anspruch 1, **dadurch gekennzeichnet, daß** die Folie (20) unter einem Winkel von etwa 45° zum Boden (30) der Bühne (28) verläuft.

3. Verwendung eines Bildprojektors nach Anspruch 1 oder 2, **dadurch gekennzeichnet, daß** dieser ein rechnergesteuerter intelligenter Lichtverstärker ist.

4. Verwendung eines Bildprojektors nach Anspruch 3, **dadurch gekennzeichnet, daß** ein Spiegel (14) vor dem rechnergesteuerten Lichtverstärker angeordnet und dieser auf dem Spiegel (14) gerichtet ist und der Spiegel (14) das von dem Lichtverstärker abgestrahlte Licht empfängt, auf die reflektierende Fläche (18) ausgerichtet ist und das Licht auf diese projiziert.

5. Verwendung eines Bildprojektors nach Anspruch 4, **dadurch gekennzeichnet, daß** der Lichtverstärker und der Spiegel (14) durch eine über die gesamte Breite der Bühne (28) verlaufende Abdeckleiste (34) oder einen Vorhang nach vorne abgedeckt sind.

6. Verwendung eines Bildprojektors nach einem der vorhergehenden Ansprüche, **dadurch gekennzeichnet, daß** die Folie (20) auf einem Aufwickelrohr (24) aufgewickelt und von diesem abziehbar und mit ihrem freien Ende in einen Bock (22) einspannbar ist.

7. Verwendung eines Bildprojektors nach einem der Ansprüche 1 bis 6, **dadurch gekennzeichnet, daß** die reflektierende Fläche (18) ein weißer Farbanstrich ist.

8. Verwendung eines Bildprojektors nach einem der Ansprüche 1 bis 6, **dadurch gekennzeichnet, daß** die reflektierende Fläche (18) eine weiße Leinwand ist.

9. Verwendung eines Bildprojektors nach einem der Ansprüche 1 bis 8, **dadurch gekennzeichnet, daß** der Boden (30) der Bühne (28) heb- und senkbar ist.

10. Verwendung eines Bildprojektors nach einem der Ansprüche 1 bis 9, **dadurch gekennzeichnet, daß** sämtliche Bauteile (12, 14 ,18, 20, 28) von einem Gitterrahmen (44) umschlossen und an diesem befestigbar sind.

11. Verwendung eines Bildprojektors nach Anspruch 10, **dadurch gekennzeichnet, daß** der Gitterrahmen (44) zwei auf beiden Seiten der Bühne (28) aufstellbare Einheiten umfaßt und jede Einheit einen Untergurt (46), einen Obergurt (48), einen Vordergurt (50) und einen Hintergurt (52) aufweist.

12. Verwendung eines Bildprojektors nach Anspruch 11, **dadurch gekennzeichnet, daß** die beiden auf beiden Seiten der Bühne (28) aufstellbaren Gitterrahmen-Einheiten durch quer verlaufende Streben verbindbar sind.

13. Verwendung eines Bildprojektors nach einem der vorhergehenden Ansprüche 6 und 11, **dadurch gekennzeichnet, daß** das Aufwickelrohr (24) über einen Bügel an der Obergurten (48) und der Bock (22) an den Untergurten (46) befestigt ist.

## Claims

1. Use of an image projector (12), of a reflecting surface (18) and of a smooth transparent and partially reflecting foil (20) for representing moving images in the background of a stage or the like, wherein the reflecting surface (18) is arranged on the floor (30) of the stage (28) in the central region thereof and the foil (20) extends between the floor (30) and the ceiling (32) of the stage (28) over the entire width thereof in such way that its lower end is held in a position between the reflecting surface (18) and the background of the stage (28) and its upper end is held at the ceiling (32) at a position which is disposed further forwardly, and the image projector (12) is arranged at the ceiling (32) in front of the upper end of the foil (20) which is held there, and is directed on to the reflecting surface (18) so that the light projected by the image projector (12) is partially reflected by the reflecting surface (18) so that a virtual image (26) is created from the reflected light in the background of the stage (28), and that the foil (20) has a surface area of at least 3 meters times 4 meters and is subject to a tensile stress.

2. Use of an image projector as set forth in claim 1, **characterised in that** the foil (2) extends at an angle of about 45° relative to the floor (30) of the stage (28).

3. Use of an image projector as set forth in claim 1 or claim 2, **characterised in that** it is a computer-controlled intelligent light amplifier (12).

4. Use of an image projector as st forth in claim 3, **characterised in that** a mirror (14) is arranged in front of the computer-controlled light amplifier (12) and the latter is directed on to the mirror (14) and the mirror (14) receives the light radiated from the light amplifier, is directed on to the reflecting surface (18) and projects the light on to the same.

5. Use of an image projector as set forth in claim 4, **characterised in that** the light amplifier (12) and the mirror (14) are covered over forwardly by cover bar (34) extending over the entire width of the stage (28) or by a curtain.

6. Use of an image projector as set forth in one of the claims 1 to 5, **characterised in that** the foil (20) is rolled on a winding tube (24) and can be pulled off the same and can be fixed with its fee end in a support mounting (22).

7. Use of an image projector as set forth in one of the claims 1 to 6, **characterised in that** the reflecting surface (18) is a coat of white paint.

8. Use of an image projector as set forth in one of the claims 1 through 6, **characterised in that** the reflecting surface (18) is a white cloth.

9. Use of an image projector as set forth in one of claims 1 through 8, **characterised in that** the floor (30) of the stage (28) can be raised and lowered.

10. Use of an image projector as set forth in one of claims 1 through 9, **characterised in that** all components (12, 14, 18, 20, 28) are enclosed by a lattice frame (24) and can be fixed thereto.

11. Use of an image projector as set forth in claim 10, **characterised in that** the lattice frame (44) includes two units which can be set up on both sides of the stage (28) and each unit has a lower girder portion (46), an upper girder portion (48), a front girder portion (50) and a back girder portion (52).

12. Use of an image projector as set forth in claim 11, **characterised in that** the two lattice frame units which can be set up on both sides of the stage (28) can be connected by transversely extending struts.

13. Use of an image projector as set forth in claim 6 and 11, **characterised in that** the winding tube (24) is fixed by way of a bracket to the upper girder portions (48) and the support mounting (22) is fixed on the lower girder portions (46).

## Revendications

1. Utilisation d'un projecteur d'images (12), d'une surface réfléchissante (18) et d'une feuille (20) lisse transparente et partiellement réfléchissante pour la représentation d'images à l'arrière-plan d'une scène (28) ou similaire, la surface réfléchissante (18) étant disposée au sol (30) de la scène (28) dans la zone centrale de celle-ci et la feuille (20) s'étendant entre le sol (30) et le plafond (32) de la scène (28) sur l'ensemble de la largeur de celle-ci d'une telle manière que son extrémité inférieure est tenue à un endroit entre la surface réfléchissante (18) et l'arrière-plan de la scène (28) et son extrémité supérieure est tenue au plafond (32) à un endroit situé plus avant, et le projecteur d'images (12) étant disposé au plafond (32) devant l'extrémité supérieure de la feuille (20), qui y est tenue et étant dirigé vers la surface réfléchissante (18), de sorte que la lumière projetée par le projecteur d'images (12) est réfléchie d'abord en partie de la surface réfléchissante (18), de sorte que la lumière réfléchie est produite une image virtuelle (26) à l'arrière-plan de la scène (28), d'une telle manière que la feuille (20) présente une surface de 3m x 4m au moins et est soumise à un effort de traction.

2. Utilisation d'un projecteur d'images selon la revendication 1, **caractérisée par le fait que** la feuille (20) s'étend sous un angle d'à peu près 45° vers le sol (30) de la scène (28).

3. Utilisation d'un projecteur d'images selon la revendication 1 ou 2, **caractérisée par le fait que** celui-ci est un amplificateur intelligent de lumière, qui est commandé par ordinateur.

4. Utilisation d'un projecteur d'images selon la revendication 3, **caractérisée par le fait qu'**un miroir (14) est disposé devant le dit amplificateur de lumière commandé par ordinateur et que celui-ci est dirigé vers le miroir (14) et que le miroir (14) reçoit la lumière rayonnée par l'amplificateur de lumière, est pointé sur la surface réfléchissante (18) et projette la lumière sur celle-ci.

5. Utilisation d'un projecteur d'images selon la revendication 4, **caractérisée par le fait que** l'amplificateur de lumière et le miroir (14) sont couverts par une baguette de recouvrement (34) s'étendant sur l'ensemble de la largeur de la scène (28), ou par un rideau.

6. Utilisation d'un projecteur d'images selon une des revendications, **caractérisée par le fait que** la feuille (20) est enroulée sur un tube enrouleur (24) et peut être déroulée de celui-ci et peut être serrée, avec son extrémité libre, dans un chevalet (22).

7. Utilisation d'un projecteur d'images selon une des revendications 1 à 6, **caractérisée par le fait que** la surface réfléchissante (18) est une peinture en couleur blanche.

8. Utilisation d'un projecteur d'images selon une des revendications 1 à 6, **caractérisée par le fait que** la surface réfléchissante (18) est un écran blanc.

9. Utilisation d'un projecteur d'images selon une des revendications 1 à 8, **caractérisée par le fait que** le sol (30) de la scène (28) peut être levé et abaissé.

10. Utilisation d'un projecteur d'images selon une des revendications 1 à 9, **caractérisée par le fait que** tous les composants (12, 14, 18, 20, 28) sont enfermés d'un cadre en treillis (44) et peuvent être fixés sur celui-ci.

11. Utilisation d'un projecteur d'images selon la revendication 10, **caractérisée par le fait que** le cadre en treillis (44) comprend deux unités qui peuvent être placées de part et d'autre de la scène (28) et que chacune des unités présente une membrure inférieure (46), une membrure supérieure (48), une membrure avant (50) et une membrure arrière (52).

12. Utilisation d'un projecteur d'images selon la revendication 11, **caractérisée par le fait que** les deux unités du cadre en treillis, qui peuvent être placées de part et d'autre de la scène (28) peuvent être reliées entre elles par le biais d'entretoises s'étendant transversalement.

13. Utilisation d'un projecteur d'images selon les revendications 6 et 11, **caractérisée par le fait que** le tube enrouleur (24) est fixé par une pièce recourbée en arc sur les membrures supérieures (48) et que le chevalet (22) est fixé sur les membrures inférieures (46).
